# EUROPÄISCHE PATENTSCHRIFT

(11) **EP 2 394 324 B1**
(45) Veröffentlichungstag und Bekanntmachung des Hinweises auf die Patenterteilung: **10.06.2015**
(21) Anmeldenummer: 10704098.2
(22) Anmeldetag: 09.02.2010
(51) Int. Cl.: H01M 10/04, H01M 2/02, H01M 10/05, H01M 10/24, H01M 10/34, H01M 6/10

(54) **KNOPFZELLEN UND VERFAHREN ZU IHRER HERSTELLUNG**
BUTTON CELLS AND METHOD FOR PRODUCING SAME
PILES-BOUTONS ET LEUR PROCÉDÉ DE FABRICATION

(30) Priorität: 09.02.2009 DE 102009008859; 18.06.2009 DE 102009030359; 22.12.2009 DE 102009060788
(43) Veröffentlichungstag der Anmeldung: 14.12.2011
(73) Patentinhaber: VARTA Microbattery GmbH, 73479 Ellwangen (DE)
(72) Erfinder: PYTLIK, Eduard, 73479 Ellwangen (DE); LINDNER, Jürgen, 73479 Ellwangen (DE); BARENTHIN, Ulrich, 73479 Ellwangen (DE); GAUGLER, Winfried, 73479 Ellwangen (DE)
(74) Vertreter: Patentanwälte Ruff, Wilhelm, Beier, Dauster & Partner
(86) Internationale Anmeldenummer: PCT/EP2010/000787
(87) Internationale Veröffentlichungsnummer: WO 2010/089152

(56) Entgegenhaltungen:
- DE-A1- 19 857 638
- US-B1- 6 265 100

## Beschreibung

Die vorliegende Erfindung betrifft Knopfzellen umfassend zwei metallische Gehäusehalbteile, die durch eine elektrisch isolierende Dichtung voneinander getrennt sind und die ein Gehäuse mit einem ebenen Bodenbereich und einem dazu parallelen ebenen Deckelbereich ausbilden sowie innerhalb des Gehäuses mit einem Elektroden-Separator-Verbund, umfassend mindestens eine positive und mindestens eine negative Elektrode, die als flache Schichten ausgebildet und über mindestens einen flächigen Separator miteinander verbunden sind.

Knopfzellen weisen üblicherweise ein Gehäuse aus zwei Gehäusehalbteilen, einem Zellenbecher und einem Zellendeckel, auf. Diese können beispielsweise aus vernickeltem Tiefziehblech als Stanzziehteile hergestellt werden. Gewöhnlich ist der Zellenbecher positiv und der Gehäusedeckel negativ gepolt. In dem Gehäuse können die verschiedensten elektrochemischen Systeme enthalten sein, beispielsweise Zink/MnO₂, primäre und sekundäre Lithium-Systeme oder sekundäre Systeme wie Nickel/Cadmium oder Nickel/Metallhydrid.

Sehr verbreitet sind z.B. wiederaufladbare Knopfzellen auf Basis von Nickel-Metallhydrid- oder Lithium-Ionen-Systemen. Bei Lithium-Ionen-Knopfzellen werden die elektrochemisch aktiven Materialien innerhalb des Knopfzellengehäuses üblicherweise nicht in Form von einzelnen, durch einen Separator voneinander getrennten, tablettenförmigen Elektroden angeordnet. Stattdessen werden bevorzugt vorgefertigte Elektroden-Separator-Verbünde flach in das Gehäuse eingelegt. Als Separator dient dabei bevorzugt eine poröse Kunststofffolie, auf welche die Elektroden flächig auflaminiert oder aufgeklebt sind. Der Gesamtverbund aus Separator und Elektroden ist dabei in der Regel maximal wenige 100 µm dick. Um Knopfzellengehäuse üblicher Dimensionen ausfüllen zu können, werden daher häufig mehrere solcher Verbünde flach übereinander gelegt. Auf diese Weise lassen sich Stapel in grundsätzlich beliebiger Höhe erhalten, jeweils abgestimmt auf die zur Verfügung stehenden Dimensionen des Knopfzellengehäuses, in das der Stapel verbaut werden soll. So wird eine optimale Ausnutzung des zur Verfügung stehenden Gehäuseinnenraumes gewährleistet.

Konstruktionsbedingt treten bei Knopfzellen, die solche Stapel aus Elektroden-Separator-Verbünden enthalten, allerdings auch diverse Probleme auf. Zum einen ist es natürlich erforderlich, Elektroden von jeweils gleicher Polarität innerhalb des Stapels miteinander zu verbinden und dann jeweils mit dem entsprechenden Pol des Knopfzellengehäuses zu kontaktieren. Die erforderlichen elektrischen Kontakte verursachen Materialkosten, der durch sie eingenommene Raum steht zudem für Aktivmaterial nicht mehr zur Verfügung. Die Herstellung der Elektrodenstapel ist darüber hinaus kompliziert und teuer, da bei der Kontaktierung der Verbünde untereinander leicht Fehler auftreten können, die die Ausschussrate erhöhen. Zum anderen wurde festgestellt, dass Knopfzellen mit einem Stapel aus Elektroden und Separatoren sehr schnell undicht werden.

Der flüssigkeitsdichte Verschluss von Knopfzellen erfolgt klassisch durch Umbördeln des Randes des Zellenbechers über den Rand des Zellendeckels in Verbindung mit einem Kunststoffring, der zwischen Zellenbecher und Zellendeckel angeordnet ist und der gleichzeitig als Dichtungselement sowie zur elektrischen Isolierung des Zellenbechers und des Zellendeckels dient. Derartige Knopfzellen sind beispielsweise in der DE 31 13 309 beschrieben.

Alternativ ist es jedoch auch möglich, Knopfzellen zu fertigen, bei denen Zellenbecher und Zellendeckel in axialer Richtung ausschließlich durch eine kraftschlüssige Verbindung zusammengehalten werden und die keinen umgebördelten Becherrand aufweisen. Derartige Knopfzellen sowie ein Verfahren zu ihrer Herstellung sind in der deutschen Patentanmeldung mit dem Aktenzeichen DE 10 2009 017 514 A1 beschrieben. Ungeachtet der diversen Vorteile, die solche Knopfzellen ohne Bördelung aufweisen können, sind sie in axialer Richtung jedoch weniger belastbar als vergleichbare Knopfzellen mit umgebördeltem Becherrand, insbesondere was axiale mechanische Belastungen angeht, die ihre Ursache im Inneren der Knopfzelle haben. So sind zum Beispiel die Elektroden von wiederaufladbaren Lithium-Ionen-Systemen bei Lade- und Entladevorgängen stets Volumenänderungen ausgesetzt. Die dabei auftretenden axialen Kräfte können bei Knopfzellen ohne Bördelung natürlich vergleichsweise leichter zu Undichtigkeiten führen als bei Knopfzellen mit Bördelung.

Aus der US 6 265 100 B1 sind wiederaufladbare Lithiumbatterien für Hörgeräte bekannt, die einen spiralförmigen Elektrodenwickel enthalten können. U.a. ist auch erwähnt, dass es sich bei den Batterien um Knopfzellen handeln kann. Details betreffend das Gehäuse der Knopfzellen, insbesondere zum Verschluss des Gehäuses, sind allerdings nicht beschrieben.

Der vorliegenden Erfindung lag die Aufgabe zugrunde, eine Knopfzelle bereitzustellen, bei der die oben angesprochenen Probleme nicht oder nur in stark verringertem Maß auftreten. Die Knopfzelle soll insbesondere gegenüber in axialer Richtung auftretenden mechanischen Belastungen widerstandsfähiger sein als herkömmliche Knopfzellen, insbesondere auch dann, wenn sie als Knopfzelle ohne umgebördelten Becherrand gefertigt wird.

Diese Aufgabe wird gelöst durch die Knopfzelle mit den Merkmalen des Anspruchs 1. Bevorzugte Ausführungsformen der erfindungsgemäßen Knopfzelle sind in den abhängigen Ansprüchen 2 bis 10 definiert.

Eine erfindungsgemäße Knopfzelle umfasst stets zwei metallische Gehäusehalbteile, die durch eine elektrisch isolierende Dichtung voneinander getrennt sind und die ein Gehäuse mit einem ebenen Bodenbereich und einem dazu parallelen ebenen Deckelbereich ausbilden. Bei den beiden Gehäusehalbteilen handelt es sich, wie eingangs bereits erwähnt, um einen sogenannten Gehäusebecher und einen Gehäusedeckel. Als Gehäusehalbteile sind insbesondere Teile aus vernickeltem Stahl oder Blech bevorzugt. Weiterhin als metallischer Werkstoff geeignet sind insbesondere Trimetalle, beispielsweise mit der Abfolge Nickel, Stahl (oder Edelstahl) und Kupfer (wobei die Nickelschicht bevorzugt die Außen- und die Kupferschicht bevorzugt die Innenseite des Knopfzellengehäuses bildet).

Als Dichtung kann beispielsweise eine Spritzguß- oder eine Foliendichtung zum Einsatz kommen. Letztere sind beispielsweise in der DE 196 47 593 beschrieben.

Innerhalb des Gehäuses umfasst eine erfindungsgemäße Knopfzelle einen Elektroden-Separator-Verbund mindestens eine positive und mindestens eine negative Elektrode. Diese liegen jeweils in Form von flachen Elektrodenschichten vor. Miteinander verbunden sind die Elektroden über einen flächigen Separator. Bevorzugt sind die Elektroden auf diesen Separator auflaminiert oder aufgeklebt. Die Elektroden und der Separator weisen in der Regel jeweils nur Dicken im µm-Bereich auf. Als Separator dient in der Regel eine poröse Kunststofffolie.

Im Gegensatz zu den eingangs erwähnten Knopfzellen zeichnet sich die erfindungsgemäße Knopfzelle insbesondere dadurch aus, dass die Elektrodenschichten eine ganz besondere Orientierung aufweisen, sie sind nämlich im wesentlichen orthogonal zu dem ebenen Boden- und Deckelbereich ausgerichtet. Während aus dem Stand der Technik bekannte Knopfzellen mit gestapelten Elektroden-Separator-Verbünden diese stets flach eingelegt enthalten, so dass die Elektrodenschichten im wesentlichen parallel zu den ebenen Boden- und Deckelbereichen ausgerichtet sind, ist bei einer erfindungsgemäßen Knopfzelle das Gegenteil der Fall.

Die orthogonale Ausrichtung der Elektrodenschichten hat einen unerwartet deutlichen Vorteil, es wurde nämlich festgestellt, dass diese Ausrichtung mit einer deutlichen Verbesserung der Dichtigkeitseigenschaften einer erfindungsgemäßen Knopfzelle einhergeht, insbesondere bei Knopfzellen auf Basis von Lithium-Ionen-Systemen. Die Elektroden von wiederaufladbaren Lithium-Ionen-Systemen sind bei Lade- und Entladevorgängen stets Volumenänderungen ausgesetzt. Zu solchen Volumenänderungen kann es natürlich auch bei den Elektroden einer erfindungsgemäßen Knopfzelle kommen. Die dabei entstehenden mechanischen Kräfte wirken jedoch nicht mehr primär axial, wie das im Falle eines flach eingelegten Stapels aus Elektroden-Separator-Verbünden der Fall ist. Aufgrund der orthogonalen Ausrichtung der Elektroden wirken sie vielmehr radial. Radiale Kräfte können von dem Gehäuse einer Knopfzelle sehr viel besser aufgenommen werden als axiale. Vermutlich lassen sich darauf die verbesserten Dichtigkeitseigenschaften zurückführen.

Besonders bevorzugt sind die Elektroden und der flächige Separator einer erfindungsgemäßen Knopfzelle jeweils streifen- oder bandförmig ausgebildet. So kann zur Herstellung einer erfindungsgemäßen Knopfzelle beispielsweise von einem als Endlosband vorliegenden Separatormaterial ausgegangen werden, auf das die Elektroden flächig, insbesondere wieder in Form von Streifen oder zumindest von Rechtecken, aufgebracht, insbesondere auflaminiert, werden.

Im Gehäuse einer erfindungsgemäßen Knopfzelle liegt dieser Verbund besonders bevorzugt in Form eines Wickels, insbesondere in Form eines spiralförmigen Wickels, vor. Derartige Wickel lassen sich nach bekannten Verfahren (s. z.B. DE 36 38 793) recht einfach herstellen, indem auf einen als Endlosband vorliegenden Separator die Elektroden flächig, insbesondere in Form von Streifen, aufgebracht, insbesondere auflaminiert, werden. Aufgewickelt wird der Verbund aus Elektroden und Separatoren dabei in der Regel auf einen sogenannten Wickeldorn. Nach Abstreifen des Wickels vom Wickeldorn bleibt im Zentrum des Wickels ein axialer Hohlraum zurück. Das hat zur Folge, dass sich der Wickel gegebenenfalls in diesen Hohlraum hinein entspannen kann. Dies kann jedoch unter Umständen zu Problemen bei der elektrischen Kontaktierung der Elektroden mit den metallischen Gehäusehalbteilen führen, was im Folgenden noch genauer beschrieben wird.

Der Elektrodenwickel ist innerhalb einer erfindungsgemäßen Knopfzelle (damit die Elektrodenschichten des Wickels orthogonal zu dem ebenen Boden- und Deckelbereich des Gehäuses ausgerichtet sind) bevorzugt derart angeordnet, dass die Stirnseiten des Wickels in Richtung des ebenen Bodenbereichs und des ebenen Deckelbereichs weisen.

Gemäß der vorliegenden Erfindung ist es vorgesehen, dass eine erfindungsgemäße Knopfzelle in bevorzugten Ausführungsformen einen festen Wickelkern im Zentrum des Wickels aufweist, der den axialen Hohlraum im Zentrum des Wickels mindestens teilweise ausfüllt. Ein solcher Wickelkern fixiert den Elektrodenwickel in radialer Richtung und verhindert eine mögliche Implosion des Wickels in den axialen Hohlraum. Bei einer derartigen Entspannung des Wickels lässt auch der Druck nach, den die Stirnseiten des Wickels in axialer Richtung und damit in Richtung dort gegebenenfalls angeordneter Ableiter (hierzu unten noch mehr) ausüben. Wird dies unterbunden, so resultieren in der Regel auch keine Probleme mit der elektrischen Kontaktierung der Elektroden und der metallischen Gehäusehalbteile.

Daneben verbessert ein solcher Wickelkern auch die Stabilität der erfindungsgemäßen Knopfzelle gegenüber äußeren mechanischen Einflüssen. Eine Beschädigung des Elektrodenwickels in der Knopfzelle durch einen äußeren mechanischen Druck in axialer Richtung ist in der Regel nicht mehr möglich.

Gemäß der bevorzugten Ausführungsform des Elektrodenwickels als spiralförmiger Elektrodenwickel ist der erwähnte axiale Hohlraum im Zentrum des Wickels vorzugsweise im Wesentlichen zylindrisch (insbesondere kreiszylindrisch) ausgebildet. Mantelseitig wird er durch den Wickel begrenzt, stirnseitig durch entsprechende Flächen des Boden- bzw. des Deckelbereichs des Knopfzellengehäuses.

Entsprechend ist auch der in einer erfindungsgemäßen Knopfzelle enthaltene Wickelkern bevorzugt als Zylinder, insbesondere als Hohlzylinder, ausgebildet. Die Höhe eines solchen Zylinders entspricht bevorzugt dem jeweiligen Abstand des ebenen Bodenbereichs von dem dazu parallelen ebenen Deckelbereich.

In besonders bevorzugten Ausführungsformen kann der Wickelkern radial selbstexpandierende Eigenschaften aufweisen. Es ist zum Beispiel möglich, den Wickelkern in einer radial komprimierten Konfiguration in den axialen Hohlraum des Wickels einer erfindungsgemäßen Knopfzelle einzuführen. Bei Entspannung des radial komprimierten Wickelkerns übt dieser einen radialen Druck auf den ihn umgebenden Elektrodenwickel aus und gewährleistet so einen Anpressdruck auch in axialer Richtung.

Als radial selbstexpandierender Wickelkern kann beispielsweise ein axial geschlitzter Hohlzylinder zum Einsatz kommen. Alternativ sind jedoch auch andere radial selbstexpandierende Materialien, beispielsweise auf Kunststoffbasis, denkbar.

Besonders bevorzugt besteht der Wickelkern aus einem Metall wie Edelstahl oder aus Kunststoff.

Besonders bevorzugt weist der Verbund aus Elektroden und Separator in einer erfindungsgemäßen Knopfzelle eine der folgenden Schichtabfolgen auf:
- negative Elektrode / Separator / positive Elektrode / Separator
   oder
- positive Elektrode / Separator / negative Elektrode / Separator.

Derartige Verbünde lassen sich sehr einfach herstellen und aufwickeln, ohne dass es zu Kurzschlüssen zwischen entgegengesetzt gepolten Elektroden kommt.

Bei den in einer erfindungsgemäßen Knopfzelle einsetzbaren Separatoren handelt es sich vorzugsweise um Folien aus mindestens einem Kunststoff, insbesondere aus mindestens einem Polyolefin. Bei dem mindestens einen Polyolefin kann es sich beispielsweise um Polyethylen handelt. Es können aber auch mehrlagige Separatoren verwendet werden, beispielsweise Separatoren aus einer Abfolge verschiedener Polyolefinschichten, z.B. mit der Sequenz Polyethylen/Polypropylen/Polyethylen.

Zur Herstellung von Verbünden der oben genannten Abfolge müssen nicht zwingend mehrere separate Separatoren zum Einsatz kommen. Vielmehr kann ein Separator auch um das Ende einer der Elektroden umgeschlagen werden, so dass im Ergebnis beide Seiten dieser Elektrode von dem Separator bedeckt werden.

Die in einer erfindungsgemäßen Knopfzelle bevorzugt einsetzbaren Separatoren weisen bevorzugt eine Dicke zwischen 3 µm und 100 µm, insbesondere zwischen 10 µm und 50 µm, auf.

Die Elektroden einer erfindungsgemäßen Knopfzelle weisen bevorzugt eine Dicke zwischen 10 µm und 1000 µm, insbesondere zwischen 30 µm und 500 µm, auf.

In bevorzugten Ausführungsformen einer erfindungsgemäßen Knopfzelle sind die negative Elektrode und die positive Elektrode im Elektroden-Separator-Verbund innerhalb des Verbundes versetzt zueinander angeordnet. Unter einer versetzten Anordnung soll dabei verstanden werden, dass die Elektroden derart angeordnet sind, dass in der erfindungsgemäßen Knopfzelle eine jeweils unterschiedliche Beabstandung der Elektroden zu den ebenen Boden- und Deckelbereichen resultiert. Im einfachsten Fall können z.B. eine positive und eine negative Elektrode als gleich breite Streifen leicht versetzt auf die gegenüberliegenden Seiten eines Separatorbandes aufgebracht werden, so dass der Abstand der positiven Elektrode zum oberen Separatorrand größer ist als der vergleichbare Abstand von der negativen Elektrode aus gemessen. Umgekehrtes gilt dann natürlich im Hinblick auf den Abstand zum unteren Separatorrand.

In besonders bevorzugten Ausführungsformen liegt, vorzugsweise als Resultat dieser versetzten Anordnung, die positive Elektrode, insbesondere ein Rand der positiven Elektrode, unmittelbar am Becherteil an, insbesondere im ebenen Bodenbereich des Becherteils, während die negative Elektrode, insbesondere ein Rand der negativen Elektrode, unmittelbar am Deckelteil, insbesondere im ebenen Deckelbereich des Deckelteils, anliegt. In dieser Ausführungsform besteht ein unmittelbarer elektrischer und mechanischer Kontakt zwischen den Elektroden und dem Becher- bzw. Deckelteil. Die versetzte Anordnung der Elektroden zueinander ermöglicht also eine Kontaktierung der Elektroden mit den jeweiligen Gehäuseteilen, ohne dass zusätzliche elektrische Kontakte und Verbindungsmittel zum Einsatz kommen müssen.

In alternativen bevorzugten Ausführungsformen kann es allerdings auch bevorzugt sein, dass zumindest eine der Elektroden, vorzugsweise sowohl die mindestens eine negative als auch die mindestens eine positive Elektrode in einer erfindungsgemäßen Knopfzelle, über einen oder mehrere Ableiter mit den ebenen Boden- und Deckelbereichen verbunden sind. Bei den Ableitern kann es sich beispielsweise um Ableiterfahnen aus Kupfer oder einem anderen geeigneten Metall handeln. Elektrodenseitig können die Ableiter z.B. an einen Stromkollektor angebunden sein. Eine Anbindung der Ableiter ans Gehäuse und/oder an die Stromkollektoren kann z.B. über Verschweissung oder über eine Klemmverbindung erfolgen.

Im einfachsten Fall können als Ableiter auch die Stromkollektoren von positiver und negativer Elektrode selbst fungieren. Bei solchen Kollektoren handelt es sich in der Regel um metallische Folien oder Netze, die in das jeweilige Elektrodenmaterial eingebettet sind. Unbedeckte Teilbereiche, insbesondere Endstücke, solcher Kollektoren können umgebogen und in Kontakt mit dem Knopfzellengehäuse gebracht werden.

Die Verwendung von Ableitern kann insbesondere dann vorteilhaft sein, wenn die negative Elektrode und die positive Elektrode innerhalb des Verbundes derart zueinander angeordnet sind, dass für die Elektroden eine jeweils gleiche Beabstandung zu den ebenen Boden- und Deckelbereichen resultiert. Oder mit anderen Worten, wenn die Elektroden innerhalb des Elektroden-Separator-Verbundes nicht versetzt zueinander angeordnet sind, wie es oben beschrieben wurde.

Allerdings besteht bei gleicher Beabstandung entgegengesetzt gepolter Elektroden zu den ebenen Boden- und Deckelbereichen die Gefahr, dass eine positive und eine negative Elektrode gleichzeitig das metallische Becher- oder Deckelteil berühren, so dass ein Kurzschluss entsteht. In bevorzugten Ausführungsformen kann die erfindungsgemäße Knopfzelle deshalb mindestens ein Isoliermittel umfassen, das einen direkten und unmittelbaren mechanischen und elektrischen Kontakt zwischen den Stirnseiten des Wickels und den ebenen Boden- und Deckelbereichen unterbindet.

In Weiterbildung ist es bevorzugt, wenn die Elektroden in einer solchen erfindungsgemäßen Knopfzelle über die bereits erwähnten separaten Ableiter mit den ebenen Boden- und Deckelbereichen verbunden sind. Diese gewährleisten den elektrischen Kontakt zwischen den Elektroden und dem Gehäuse.

Dabei ist es bevorzugt, dass zumindest ein Teilabschnitt des oder der Ableiter im Boden- bzw. im Deckelbereich des Gehäuses flach an der Innenseite der Gehäusehalbteile anliegt. Ideal ist die elektrische Kontaktierung der Ableiter mit den Innenseiten des Gehäuses natürlich dann, wenn sie zumindest leicht an das Gehäuse angepresst werden (falls sie nicht ohnehin angeschweisst sind). Überraschend effizient kann dies durch geeignete Anordnung des oben erwähnten Wickelkerns in einer erfindungsgemäßen Knopfzelle erreicht werden.

Bei dem Isoliermittel kann es sich z.B. um eine flache Schicht aus Kunststoff, beispielsweise um eine Kunststofffolie handeln, die zwischen den Stirnseiten des Wickels und den ebenen Boden- und Deckelbereichen des Gehäuses einer erfindungsgemäßen Knopfzelle angeordnet ist.

Bei der erfindungsgemäßen Knopfzelle handelt es sich entsprechend den obigen Ausführungen insbesondere um eine wiederaufladbare Knopfzelle. Besonders bevorzugt weist eine erfindungsgemäße Knopfzelle mindestens eine Lithium-interkalierende Elektrode auf.

Das Verhältnis von Höhe zu Durchmesser liegt bei Knopfzellen definitionsgemäß unterhalb von 1. Besonders bevorzugt liegt dieses Verhältnis bei einer erfindungsgemäßen Knopfzelle zwischen 0.1 und 0.9, insbesondere zwischen 0.15 und 0.7. Unter der Höhe soll dabei der Abstand zwischen dem ebenen Bodenbereich und dem dazu parallelen ebenen Deckelbereich verstanden werden. Der Durchmesser meint die maximale Entfernung zweier Punkte auf dem Mantelbereich der Knopfzelle.

Besonders bevorzugt handelt es sich bei der erfindungsgemäßen Knopfzelle um eine Knopfzelle ohne Bördelung, wie sie in der eingangs bereits erwähnten Patentanmeldung mit dem Aktenzeichen DE 10 2009 017 514 A1 beschrieben ist. Entsprechend besteht zwischen den Gehäusehalbteilen bevorzugt eine ausschließlich kraftschlüssige Verbindung. Die erfindungsgemäße Knopfzelle weist also keinen umgebördelten Becherrand auf, wie dies bei aus dem Stand der Technik bekannten Knopfzellen stets der Fall ist. Die Knopfzelle ist bördelfrei verschlossen.

Für solche bördelfreien Knopfzellen greift man in der Regel auf übliche Zellenbecher und Zellendeckel zurück, die jeweils einen Boden- bzw. einen Deckelbereich, einen Mantelbereich, einen zwischen Boden- bzw. Deckelbereich und Mantelbereich angeordneten Randbereich und eine Schnittkante aufweisen. Zusammen bilden Zellenbecher und Zellendeckel ein Gehäuse, das eine Aufnahme für die üblichen Innenkomponenten einer Knopfzelle wie Elektroden, Separator etc. bildet. Wie üblich sind in diesem Gehäuse der Bodenbereich des Zellenbechers und der Deckelbereich des Zellendeckels im wesentlichen parallel zueinander ausgerichtet. Die Mantelbereiche von Zellenbecher und Zellendeckel sind in der fertigen Knopfzelle im wesentlichen orthogonal zum Boden- bzw. zum Deckelbereich ausgerichtet und weisen bevorzugt eine im wesentlichen zylindrische Geometrie auf. Vorzugsweise sind Innen- und Außenradius von Zellenbecher und Zellendeckel in den Mantelbereichen im wesentlichen konstant. Die erwähnten Randbereiche von Zellenbecher und Zellendeckel bilden den Übergang zwischen den Mantelbereichen und dem Deckelbereich bzw. dem Bodenbereich. Sie sind also bevorzugt zum einen begrenzt durch die im wesentlichen eben ausgebildeten Boden- und Deckelbereiche, zum anderen durch die orthogonal zu diesen angeordneten im wesentlichen zylindrischen Mantelbereiche. Die Randbereiche können beispielsweise als scharfe Kante oder auch abgerundet ausgebildet sein.

Zur Herstellung einer bördelfreien Knopfzelle geht man in der Regel so vor, dass zunächst eine Dichtung auf den Mantelbereich eines Zellendeckels aufgebracht wird. In einem weiteren Schritt wird dann der Zellendeckel mit der aufgebrachten Dichtung in einen Zellenbecher eingeschoben, so dass sich ein Bereich ergibt, in dem die Mantelbereiche von Zellenbecher und Zellendeckel überlappen. Die Größe des Überlappungsbereiches bzw. das Verhältnis von überlappendem Bereich zu nicht überlappendem Bereichen ist dabei durch die jeweilige Höhe der Mantelbereiche von Zellenbecher und Zellendeckel sowie durch die Tiefe des Einschubs festgelegt. Hinsichtlich des Mantelbereichs des Zellendeckels ist es im Rahmen der vorliegenden Erfindung festgelegt, dass zwischen 20 % und 99 %, insbesondere zwischen 30 % und 99 %, besonders bevorzugt zwischen 50 % und 99 %, mit dem Mantelbereich des Zellenbechers überlappen (die Prozentzahlen beziehen sich jeweils auf die Höhe des Mantels bzw. des Mantelbereichs). Vor dem Einschieben können in den Gehäusebecher und/oder in den Gehäusedeckel die sonstigen üblichen Bestandteile einer Knopfzelle (Elektroden, Separator, Elektrolyt etc.) eingesetzt werden. Nach dem vollständigen Einschieben des Zellendeckels in den Zellenbecher wird auf den Mantelbereich des Zellenbechers, insbesondere im Bereich der Schnittkante, ein Druck ausgeübt, um das Gehäuse abzudichten. Dabei sollen die zusammengefügten Gehäuseteile möglichst keinen oder nur sehr geringen Belastungen in axialer Richtung unterliegen. Der Druck wird daher insbesondere radial angelegt. Abgesehen von der bereits erwähnten Abdichtung des Gehäuses kann so auch der Außendurchmesser des Zellengehäuses kalibriert werden.

Besonders wichtig ist es dass die Höhen der Mantelbereiche von Zellenbecher und Zellendeckel derart aufeinander abgestimmt sind, dass die Schnittkante des Zellenbechers durch den Druck auf den Mantelbereich des Zellenbechers gegen den Mantelbereich des Zellendeckels gepresst wird. Die Höhen der Mantelbereiche sind also bevorzugt so gewählt, dass ein Umbiegen der Schnittkante des Zellenbechers nach innen über den Randbereich des vollständig in den Zellenbecher eingeschobenen Zellendeckels nicht möglich ist. Es findet entsprechend keine Umbördelung des Randes des Zellenbechers über den Randbereich des Zellendeckels statt. In Folge dessen weist der Zellenbecher einer nach dem vorliegend beschriebenen Verfahren gefertigten Knopfzelle einen Mantelbereich mit einem im wesentlichen konstanten Radius in Richtung der Schnittkante auf.

Bei nach einem solchen Verfahren hergestellten Knopfzellen besteht zwischen den Gehäusekomponenten Zellenbecher, Zellendeckel und Dichtung vorzugsweise eine ausschließlich kraftschlüssige Verbindung.

Der Zusammenhalt der Komponenten wird also bevorzugt im wesentlichen nur durch Haftkraft gewährleistet.

Besonders bevorzugt wird zur Herstellung bördelfreier Knopfzellen ein Zellenbecher verwendet, der zumindest in einem Teilbereich seines Mantels konisch ausgebildet ist, so dass zumindest sein Innendurchmesser in Richtung der Schnittkante zunimmt. Dadurch wird das Einschieben des Zellendeckels in den Zellenbecher deutlich erleichtert. Die Dimensionen von Zellenbecher und Zellendeckel sind bevorzugt so aufeinander abgestimmt, dass größere Gegenkräfte vorzugsweise erst bei nahezu vollständigem Einschub des Deckels in den Becher auftreten. Vorzugsweise liegt der Konuswinkel dabei zwischen 10 min und 3°, insbesondere zwischen 30 min und 1° 30 min.

Der Zellendeckel, der mit aufgebrachter Dichtung in den Zellenbecher eingeschoben wird, ist in bevorzugten Ausführungsformen zumindest in einem Teil des Mantelbereiches zylindrisch ausgebildet. Dies betrifft gegebenenfalls insbesondere den Teil des Mantelbereiches, der nach dem Einschieben des Zellendeckels in den Zellenbecher mit dem erwähnten konisch ausgebildeten Teilbereich des Zellenbechermantels überlappt. Besonders bevorzugt ist der Mantel des Zellendeckels und damit auch der Mantelbereich zur Gänze zylindrisch ausgebildet. Vorzugsweise weist der Zellendeckel im Mantelbereich also einen konstanten Außenradius auf. Dies betrifft gegebenenfalls insbesondere den Teil, der nach dem Einschieben des Zellendeckels mit dem konisch ausgebildeten Teil des Mantelbereichs des Zellenbechers überlappt.

Beim Einschieben eines Zellendeckels mit zylindrischem Mantelbereich in einen zumindest in einem Teilbereich seines Mantels konisch ausgebildeten Zellenbecher, wie er oben beschrieben wurde, entsteht in der Regel ein sich nach oben öffnender Spalt zwischen Zellenbecher und Zellendeckel. Dieser Spalt wird in der Regel durch den Druck auf den Mantelbereich des Zellenbechers wieder beseitigt. So wird der Druck auf den Mantelbereich des Zellenbechers gegebenenfalls so gewählt, dass der konisch ausgebildete Teil des Mantelbereichs des Zellenbechers nach innen gedrückt wird, bis die Innenseite des Zellenbechers und die Außenseite des Zellendeckels im überlappenden Bereich im wesentlichen gleichmäßig voneinander beabstandet sind. Die resultierende Knopfzelle weist Mantelbereiche auf, die parallel zueinander ausgerichtet sind, insbesondere im überlappenden Bereich.

Ein wichtiger Aspekt dabei ist die Wahl der Dichtung, die den Zellenbecher mit dem Zellendeckel verbindet. Bevorzugt handelt es sich bei der Dichtung um eine Kunststoffdichtung aus einem Thermoplasten.

Besonders bevorzugt handelt es sich bei der Kunststoffdichtung um eine Foliendichtung, wie sie z.B. in der bereits genannten DE 196 47 593 beschrieben ist, insbesondere um eine Foliendichtung aus einem Thermoplasten.

Foliendichtungen können mit einer sehr gleichmäßigen Dicke hergestellt werden. Beim Anlegen eines geeigneten Drucks auf den Mantelbereich des Zellenbechers ergibt sich eine Presspassung, infolge derer die hergestellte Knopfzelle ganz hervorragende Dichtigkeitseigenschaften aufweist. So ermöglicht nicht zuletzt die Verwendung von Foliendichtungen den Verzicht auf ein Umbördeln des Randes des Zellenbechers, ohne im Gegenzug Nachteile bei sonstigen wichtigen Eigenschaften in Kauf nehmen zu müssen.

Ganz besonders bevorzugt kommen vorliegend Kunststoffdichtungen, insbesondere Kunststofffolien, auf Basis von Polyamid oder auf Basis von Polyetheretherketonen zum Einsatz.

Es ist bevorzugt, dass die Dichtung einer bördelfreien Zelle eine Ausgangsdicke im Bereich zwischen 50 µm und 250 µm, besonders bevorzugt zwischen 70 µm und 150 µm, insbesondere von ca. 100 µm, aufweist. Unter dem Begriff "Ausgangsdicke" soll dabei die Dicke verstanden werden, die die Dichtung aufweist, bevor sie auf den Mantel des Zellendeckels aufgebracht wird. Im Gegensatz dazu soll unter dem Begriff "Enddicke" die Dicke der Dichtung in der fertigen Zelle verstanden werden. Es ist klar, dass diese zumindest im überlappenden Bereich in der Regel dem Abstand zwischen der Innenseite des Zellenbechers und der Außenseite des Zellendeckels entspricht.

Damit eine ausreichend hohe Reibung zwischen Zellenbecher und Zellendeckel entstehen kann, sollten sowohl die Außen- als auch die Innenradien von Becher und Deckel aufeinander sowie auf die Dicke der Foliendichtung abgestimmt werden. Nur so kann ein ausreichend hoher Pressdruck entstehen, der die beiden Einzelteile zusammenhält. Für die dabei verwendeten Teile gilt bevorzugt, dass die Differenz zwischen dem Außenradius des in den Zellenbecher einzuschiebenden Zellendeckels an der Schnittkante des Zellendeckels und dem kleinsten Innenradius des Zellenbechers in dem Teil des Mantelbereichs, der mit dem Mantelbereich des Zellendeckels überlappt, kleiner ist als die Ausgangsdicke der verwendeten Dichtung. Besonders bevorzugt beträgt die Differenz zwischen 10 % und 90 % der Ausgangsdicke, insbesondere zwischen 30 % und 70 %, ganz besonders bevorzugt ca. 50 %.

Nach dem Einschieben des Zellendeckels in den Zellenbecher kann ein Teil des Mantelbereiches des Zellenbechers radial nach innen eingezogen werden. Es handelt sich dabei insbesondere um den Teil des Mantelbereichs, der nicht mit dem Mantelbereich des Zellendeckels überlappt.

Es wurde gefunden, dass durch diesen radialen Einzug deutlich verbesserte Dichtigkeitseigenschaften erzielt werden können. Durch das Einziehen des Bechermantels wird ein radialer Druck auf den an der Innenwand des Gehäusebechers anliegenden Randabschnitt bzw. auf die zwischen Gehäusedeckel und Gehäusebecher angeordnete Dichtung ausgeübt, die in der Folge in diesem Bereich zusammengepresst wird.

Das Einziehen kann zeitgleich zu der bereits erwähnten Druckausübung auf den Mantelbereich des Zellenbechers erfolgen, bevorzugt erfolgt das Einziehen aber in einem späteren separaten Schritt.

Das vorliegend beschriebenen Verfahren zur Herstellung einer Knopfzelle kann insbesondere zur Herstellung von Knopfzellen dienen, wie sie vorstehend beschrieben wurde, also von Knopfzellen mit einem Gehäuse mit einem ebenen Bodenbereich und einem dazu parallelen ebenen Deckelbereich. Es eignet sich sowohl zur Herstellung von bördelfreien Knopfzellen als auch von solchen mit Bördelung.

Betreffend die bevorzugten Ausführungsformen der einzelnen in dem vorliegend beschriebenen Verfahren verwendeten Komponenten (Gehäuseteile und -dimensionen, Elektroden, Separator etc.) kann somit vollumfänglich auf die obenstehenden Ausführungen und Erläuterungen Bezug genommen und verwiesen werden.

Das Gehäuse wird in der Regel aus einem metallischen Becherteil (Gehäusebecher) und einem metallischen Deckelteil (Gehäusedeckel) zusammengefügt, wobei ein Elektroden-Separator-Verbund mit als flache Schicht ausgebildeten Elektroden derart in das Gehäuse eingesetzt wird, dass die Elektroden orthogonal zu dem ebenen Boden- und Deckelbereich ausgerichtet sind.

Wie bereits erwähnt, wird der Elektroden-Separator-Verbund bevorzugt in Form eines Wickels verbaut, insbesondere als spiralförmiger Wickel.

In aller Regel umfasst das vorliegend beschriebene Verfahren stets die Schritte
- Einsetzen des Wickels in das metallische Deckelteil und
- Einsetzen des metallischen Deckelteils mit dem Wickel in ein metallisches Becherteil.

Danach erfolgt optional das Umbördeln des Randes des Becherteils über den Rand des Deckelteils.

Sofern eine bördelfreie Knopfzelle hergestellt wird, werden die entsprechenden oben beschriebenen Schritte durchgeführt.

Vor dem Schließen des Gehäuses werden die Elektroden üblicherweise noch mit Elektrolytlösung getränkt.

Der Wickel befindet sich beim Einsetzen bevorzugt aufgerollt auf einem Wickeldorn. Nach dem oder beim Einsetzen kann der Wickeldorn dann entfernt werden. Gegebenenfalls wird dann der oben erwähnte Wickelkern eingesetzt. Alternativ kann der Elektroden-Separator-Verbund auch gleich unmittelbar auf einen solchen Kern aufgewickelt werden.

Besonders bevorzugt wird der spiralförmige Wickel vor dem Verbauen an seinen Stirnseiten wärmebehandelt. Dabei wird er zumindest kurzfristig einer Temperatur ausgesetzt, bei der der Separator in dem Wickel thermoplastisch verformbar ist. In der Regel steht der Separator an den Stirnseiten des Wickels etwas über, selbst unter der Voraussetzung, dass die Elektroden mit dem oben beschriebenen Versatz zueinander angeordnet sind. Durch die Wärmebehandlung kann der Separator etwas zusammenschrumpfen und dadurch gegebenenfalls sogar den Rand einer benachbarten Elektroden freilegen, so dass dieser unmittelbar am Knopfzellengehäuse anliegen kann.

Die genannten und weitere Vorteile der Erfindung ergeben sich aus der nun folgenden Beschreibung der Zeichnungen in Verbindung mit den Unteransprüchen. Dabei können die einzelnen Merkmale der Erfindung für sich allein oder in Kombination miteinander verwirklicht sein. Die beschriebenen Ausführungsformen dienen lediglich zur Erläuterung und zum besseren Verständnis der Erfindung und sind in keiner Weise einschränkend zu verstehen.

### Figurenbeschreibung

- Fig. 1: zeigt schematisch den Querschnitt einer Ausführungsform einer Knopfzelle.
- Fig. 2: illustriert den Effekt der Wärmebehandlung eines aufgewickelten Elektrode-Separator-Verbundes, welche bei bevorzugten Ausführungsformen des vorliegend beschriebenen Verfahrens zum Einsatz kommt.
- Fig. 3: zeigt einen Elektroden-Separator-Verbund in Form eines Wickels, wie er in einer erfindungsgemäßen Knopfzelle verbaut werden kann.
- Fig. 4: zeigt eine geschnittene Darstellung einer weiteren Ausführungsform einer Knopfzelle.
- Fig. 5: zeigt schematisch den Querschnitt einer Ausführungsform einer erfindungsgemäßen Knopfzelle, bei der der Rand des Zellenbechers nicht über den Rand des Zellendeckels gebördelt ist.

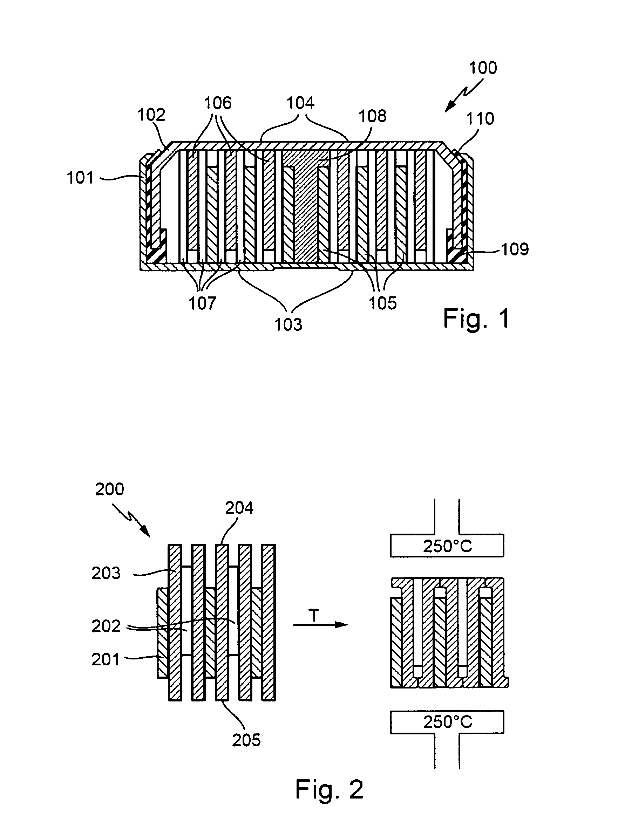

**Fig. 1** zeigt schematisch den Querschnitt einer Ausführungsform einer Knopfzelle **100.** Diese weist ein metallisches Becherteil 101 und ein metallisches Deckelteil **102** auf. Über eine Dichtung 109 sind die beiden Teile dichtend miteinander verbunden. Zusammen bilden sie ein Gehäuse mit einem ebenen Bodenbereich 103 und einem dazu parallelen ebenen Deckelbereich **104** aus. Im Gebrauchszustand bilden diese ebenen Bereiche **103** und **104** die Pole der Knopfzelle, an denen eine Stromabnahme durch einen Verbraucher erfolgen kann. Der Rand **110** des Zellenbechers **101** ist nach innen über den Rand des Zellendeckels **102** gebördelt.

Im Inneren der Elektrode ist ein Verbund aus einer streifenförmigen Elektrode **105,** einer streifenförmigen Elektrode **106** und den streifenförmigen Separatoren **107** angeordnet. Der Verbund aus den Elektroden **105** und **106** sowie den Separatoren **107** liegt dabei in Form eines Wickels vor, der mit seinen Stirnseiten an den ebenen Bodenbereich **103** und den dazu parallelen ebenen Deckelbereich **104** anstösst. Aufgewickelt ist der Verbund auf dem Kern **108** im Zentrum der Knopfzelle **100.** Sowohl der Kern **108** als auch die um ihn gewickelten Elektroden und Separatoren sind orthogonal zu den ebenen Boden- und Deckelbereichen **104** und **103** ausgerichtet. Sofern die Elektroden bei einem Lade- oder Entladevorgang an Volumen gewinnen oder verlieren, wirken die dabei resultierenden mechanischen Kräfte überwiegend radial und können vom Mantelbereich der Knopfzelle **100** aufgefangen werden.

Hervorzuheben ist, dass die positive Elektrode **105** und die negative Elektrode **106** jeweils unmittelbar an dem Becherteil **101** bzw. an dem Deckelteil **102** der Knopfzelle **100** anliegen. Ein separater Ableiter zum Verbinden der Elektroden mit dem Deckelteil **102** und dem Becherteil **101** ist nicht erforderlich.

**Fig. 2** zeigt den Effekt der Wärmebehandlung eines Elektroden-Separator-Wickels **200,** die in bevorzugten Ausführungsformen des vorliegend beschriebenen Verfahrens zur Herstellung einer Knopfzelle vorgesehen ist. Dargestellt ist schematisch ein Wickel **200** aus einem Verbund aus einer positiven Elektrode **201** (quergestreifte Balken), einer negativen Elektrode **202** (weisse Balken) und den Separatoren **203** (Ausschnitt). Die positive und die negative Elektroden **201** und **202** sind jeweils versetzt zueinander angeordnet. Die Separatoren **203** bestehen aus einem thermoplastisch verformbaren Material.

Setzt man die sich an den Stirnseiten **204** und **205** des Wickels **200** befindlichen Separatorränder einer hohen Temperatur aus (beispielsweise 250 °C, wie dargestellt), so schrumpfen diese Separatorränder. Die Separatoren ziehen sich zumindest teilweise zwischen benachbarte Elektroden zurück. Dabei werden an der Stirnseite **204** die Ränder der negativen Elektrode **202** freigelegt, während die Ränder der positiven Elektrode **201** abgedeckt werden. An der Stirnseite **205** werden die Ränder der positiven Elektrode **201** freigelegt, während die Ränder der negativen Elektrode **202** abgedeckt werden.

Beim Einsatz eines so behandelten Wickels ist gewährleistet, dass Elektroden gleicher Polarität jeweils nur am Gehäusebecher oder am Gehäusedeckel unmittelbar anliegen können. Separate elektrische Verbindungen zwischen den Elektroden und den Gehäuseteilen sind nicht erforderlich.

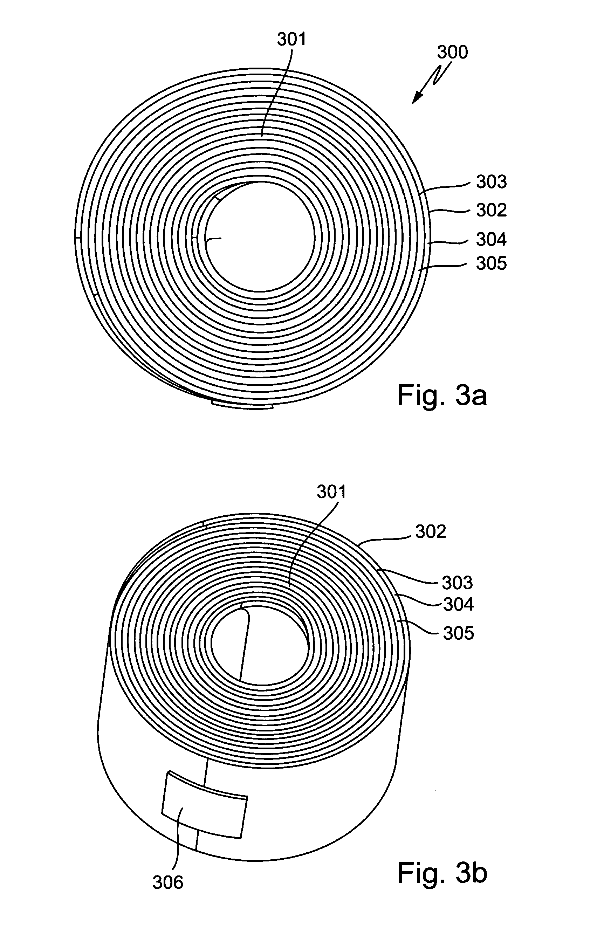

**Fig. 3** zeigt einen Elektroden-Separator-Verbund für erfindungsgemäße Knopfzellen in Form eines Wickels **300,** wobei die Darstellung A eine Draufsicht senkrecht von oben auf eine der Stirnseiten **301** des Wickels **300** abbildet, während in der Darstellung B der Wickel **300** in einer Ansicht schräg von oben dargestellt ist. Zu erkennen ist in beiden Fällen, dass der Verbund zwei Lagen Separator **302** und **303** sowie zwei Elektrodenschichten **304** und **305** (eine positive und eine negative Elektrode) umfasst. Der Verbund ist spiralförmig aufgewickelt und wird durch ein Klebeband **306** auf seiner Außenseite zusammengehalten.

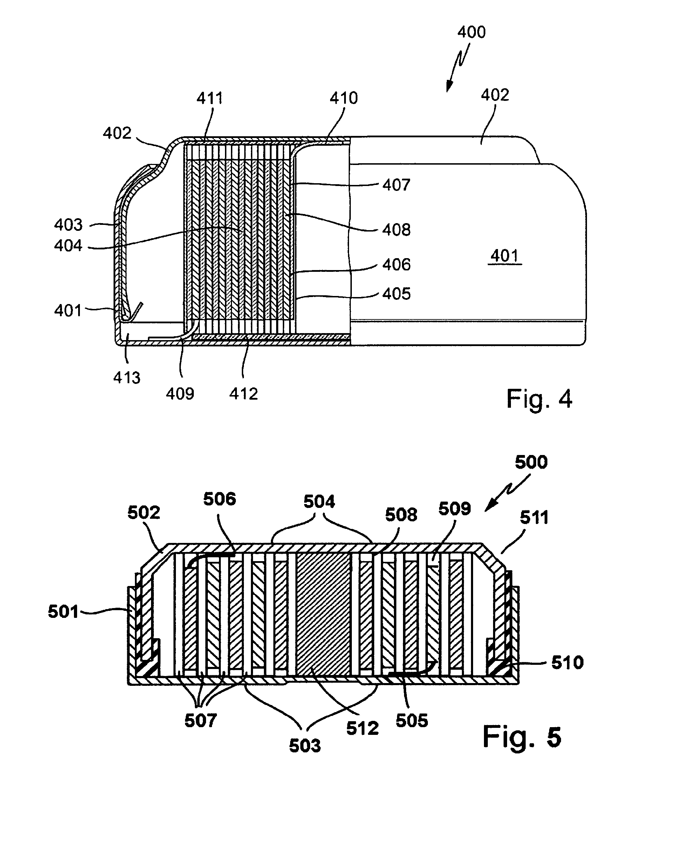

**Fig. 4** zeigt eine geschnittene Darstellung einer Ausführungsform einer Knopfzelle **400.** Zu erkennen ist das Gehäuse der Knopfzelle aus dem Becherteil **401** und dem Deckelteil **402,** zwischen denen die Dichtung **403** angeordnet ist. Innerhalb des Gehäuses ist ein Verbund aus Elektroden und Separatoren, wie er in Fig. 3 dargestellt ist, als spiralförmiger Wickel **404** (im Querschnitt schematisch dargestellt) enthalten. Gut zu erkennen sind auch hier die Separatorlagen **405** und **406** sowie die entgegengesetzt gepolten Elektroden **407** und **408.** Die Elektrode **407** ist dabei über den Ableiter **410** mit dem Deckelteil **402** verbunden, während die Elektrode **408** über den Ableiter **409** mit dem Becherteil **402** verbunden ist. Der Ableiter **410** ist vorzugsweise mit dem Deckelteil **402** verschweisst. Dagegen ist der Ableiter **409** mit dem Becherteil **402** über eine Klemmverbindung verbunden (er ist zwischen dem Stützring **413,** auf dem der Rand des Zellendeckels aufliegt, und dem Boden des Zellenbechers eingeklemmt). Zwischen den Stirnseiten des Wickels und dem Becherteil **401** und dem Deckelteil **402** sind die Isoliermittel **411** und **412** angeordnet, bei denen es sich jeweils um dünne Kunststoffscheiben handelt. Durch diese wird verhindert, dass Elektroden entgegengesetzter Polarität gleichzeitig in Kontakt mit dem Becher- oder dem Deckelteil **401** und **402** kommen können. Einem Kurzschluss wird dadurch vorgebeugt.

**Fig. 5** zeigt schematisch den Querschnitt einer Ausführungsform einer erfindungsgemäßen Knopfzelle **500.**

Diese weist ein metallisches Becherteil **501** und ein metallisches Deckelteil **502** auf. Über eine Dichtung **510** sind die beiden Teile dichtend miteinander verbunden. Zusammen bilden sie ein Gehäuse mit einem ebenen Bodenbereich **503** und einem dazu parallelen ebenen Deckelbereich **504** aus. Im Gebrauchszustand bilden diese ebenen Bereiche **503** und **504** die Pole der Knopfzelle, an denen eine Stromabnahme durch einen Verbraucher erfolgen kann.

Der Zellendeckel **502** ist in den Zellenbecher **501** eingeschoben, so dass die Mantelbereiche des Zellendeckels und des Zellenbechers überlappen, wobei der Innenradius des Zellenbechers **501** im überlappenden Bereich in Richtung der Schnittkante im wesentlichen konstant ist. Der Rand des Zellenbechers **501** ist also nicht über den Rand **511** des Zellendeckels **502** gebördelt, bei der vorliegend beschriebenen bevorzugten Ausführungsform einer erfindungsgemäßen Knopfzelle **500** handelt es sich somit um eine bördelfreie Knopfzelle.

Im Inneren der Elektrode ist ein Verbund aus einer streifenförmigen Elektrode **508,** einer streifenförmigen Elektrode **509** und den streifenförmigen Separatoren **507** angeordnet. Der Verbund aus den Elektroden **508** und **509** sowie den Separatoren **507** liegt dabei in Form eines Wickels vor, dessen Stirnseiten in Richtung des ebenen Bodenbereichs **503** und des dazu parallelen ebenen Deckelbereichs **504** weisen. Aufgewickelt ist der Verbund auf dem Wickelkern **512** im Zentrum der Knopfzelle **500.** Sowohl der Kern **512** als auch die um ihn gewickelten Elektroden und Separatoren sind orthogonal zu den ebenen Boden- und Deckelbereichen **504** und **503** ausgerichtet. Sofern die Elektroden bei einem Lade- oder Entladevorgang an Volumen gewinnen oder verlieren, wirken die dabei resultierenden mechanischen Kräfte überwiegend radial und können vom Mantelbereich der Knopfzelle **500** aufgefangen werden.

Kontaktiert sind die positiven und die negativen Elektroden mit den Gehäusehalbteilen Becher und Deckel über den Ableiter **505** und den Ableiter **506.** Der Ableiter **505** besteht aus Aluminium, der Ableiter **506** aus Nickel (oder alternativ aus Kupfer). Bei beiden Ableitern handelt es sich um dünne Folien, die flach zwischen den Stirnseiten des Wickels und den ebenen Deckel- bzw. Bodenbereichen **503** und **504** zum Liegen kommen. Bedingt durch den Wickelkern **512** wird ein steter leichter Anpressdruck auf die Ableiter aufrechterhalten. Von den Stirnseiten des Wickels sind die Ableiter bevorzugt durch ein separates Isolatorelement (in der Zeichnung nicht dargestellt) getrennt, beispielsweise durch eine dünne Folie.

## Patentansprüche

1. Knopfzelle, umfassend
- einen metallischen Zellenbecher und einen metallischen Zellendeckel, die über eine elektrisch isolierende Dichtung dichtend miteinander verbunden sind und gemeinsam ein Gehäuse mit einem ebenen Bodenbereich und einem dazu parallelen ebenen Deckelbereich ausbilden, sowie
- innerhalb des Gehäuses einen Elektroden-Separator-Verbund, umfassend mindestens eine positive und mindestens eine negative Elektrode, die als flache Schichten ausgebildet und über mindestens einen flächigen Separator miteinander verbunden sind, und wobei die Elektrodenschichten im Wesentlichen orthogonal zu dem ebenen Boden- und Deckelbereich ausgerichtet sind, **dadurch gekennzeichnet, dass**
- der Zellendeckel und der Zellenbecher jeweils einen Mantelbereich mit zylindrischer Geometrie aufweisen, die Dichtung auf den Mantelbereich des Zellendeckels aufgebracht ist und der Zellendeckel in den Zellenbecher eingeschoben ist, so dass sich ein Bereich ergibt, in dem, bezogen auf seine Höhe, zwischen 20 und 99 % des Mantelbereichs des Zellendeckels mit dem Mantelbereich des Zellenbechers überlappen und
- die Knopfzelle bördelfrei verschlossen ist.

2. Knopfzelle nach Anspruch 1, **dadurch gekennzeichnet, dass** die Elektroden und/oder der Separator streifen- oder bandförmig ausgebildet sind.

3. Knopfzelle nach Anspruch 1 oder Anspruch 2, **dadurch gekennzeichnet, dass** der Elektroden-Separator-Verbund als Wickel vorliegt, insbesondere als spiralförmiger Wickel, dessen Stirnseiten in Richtung des ebenen Bodenbereichs und des ebenen Deckelbereichs weisen.

4. Knopfzelle nach Anspruch 3, **dadurch gekennzeichnet, dass** der Wickel in seinem Zentrum einen axialen Hohlraum aufweist, der mindestens teilweise von einem Wickelkern (108; 512) ausgefüllt ist.

5. Knopfzelle nach einem der vorhergehenden Ansprüche, **dadurch gekennzeichnet, dass** der Elektroden-Separator-Verbund eine der folgenden Schichtabfolgen aufweist:
- negative Elektrode / Separator / positive Elektrode / Separator
- positive Elektrode / Separator / negative Elektrode / Separator

6. Knopfzelle nach einem der vorhergehenden Ansprüche, **dadurch gekennzeichnet, dass** die positive Elektrode und/oder die negative Elektrode über einen Ableiter mit dem Gehäuse im Bereich des ebenen Boden- und/oder des ebenen Deckelbereichs verbunden sind.

7. Knopfzelle nach einem der Ansprüche 3 bis 6, **dadurch gekennzeichnet, dass** sie mindestens ein Isoliermittel umfasst, das einen direkten mechanischen und elektrischen Kontakt zwischen den Stirnseiten des Wickels und den ebenen Boden- und Deckelbereichen unterbindet.

8. Knopfzelle nach Anspruch 7, **dadurch gekennzeichnet, dass** es sich bei dem mindestens einen Isoliermittel um eine flache Schicht aus Kunststoff, beispielsweise um eine Kunststofffolie handelt, die zwischen den Stirnseiten des Wickels und den ebenen Boden- und Deckelbereichen angeordnet ist.

9. Knopfzelle nach einem der vorhergehenden Ansprüche, **dadurch gekennzeichnet, dass** sie wiederaufladbar ist.

10. Knopfzelle nach einem der vorhergehenden Ansprüche, **dadurch gekennzeichnet, dass** sie ein Verhältnis Höhe : Durchmesser < 1, vorzugsweise zwischen 0.1 und 0.9, insbesondere zwischen 0.15 und 0.7, aufweist.

## Claims

1. A button cell, comprising
- a metallic cell cup and a metallic cell top, which are separated from one another by an electrically insulating seal and together form a housing with a flat bottom area and a flat top area parallel to it, as well as
- within the housing, an electrode-separator assembly comprising at least one positive and at least one negative electrode, which are in the form of flat layers and are connected to one another by at least one flat separator, and
- wherein the electrode layers being aligned essentially orthogonally to the flat bottom and top areas,
**characterized in that**
- the cell top and the cell cup each have a shell area of cylindrical geometry, the seal is applied on the shell area of the cell top, and the cell top is inserted in the cell cup such that an area is produced wherein, in relation to the height thereof, between 20 and 99 % of the shell area of the cell top are overlapping with the shell area of the cell cup, and
- the button cell is closed without beading over.

2. The button cell according to claim 1, **characterized in that** the electrodes and/or the separator are/is in the form of strips or ribbons.

3. The button cell according to claim 1 or claim 2, **characterized in that** the electrode-separator assembly is in the form of a winding, in particular a spiral winding, whose end faces face in the direction of the flat bottom area and the flat top area.

4. The button cell according to claim 3, **characterized in that** the winding has an axial cavity in its center, which axial cavity is at least partially filled by a winding core (108; 512).

5. The button cell according to any one of the preceding claims, **characterized in that** the electrode-separator assembly has one of the following layer sequences:
- negative electrode/separator/positive electrode/separator
- positive electrode/separator/negative electrode/separator.

6. The button cell according to any one of the preceding claims, **characterized in that** the positive electrode and/or the negative electrode are/is connected via an output conductor to the housing in the area of the flat bottom area and/or of the flat top area.

7. The button cell according to any one of the claims 3 to 6, **characterized in that** the button cell comprises at least one insulating means, which prevents direct mechanical and electrical contact between the end faces of the winding and the flat bottom and top areas.

8. The button cell according to claim 7, **characterized in that** the at least one insulating means is a flat layer composed of plastic, for example a plastic film, which is arranged between the end faces of the winding and the flat bottom and top areas.

9. The button cell according to any one of the preceding claims, **characterized in that** the button cell is rechargeable.

10. The button cell according to any one of the preceding claims, **characterized in that** the button cell has a height:diameter ratio of < 1, preferably between 0.1 and 0.9, in particular between 0.15 and 0.7.

## Revendications

1. Pile-bouton, comprenant :
- un logement de pile métallique et un couvercle de pile métallique qui sont connectés hermétiquement l'un à l'autre par le biais d'un joint d'étanchéité électriquement isolant et qui constituent ensemble un boîtier avec une région de fond plane et une région de couvercle plane parallèle à celle-ci, et
- un composite électrodes-séparateur à l'intérieur du boîtier, comprenant au moins une électrode positive et au moins une électrode négative qui sont réalisées sous forme de couches plates et qui sont connectées l'une à l'autre par le biais d'au moins un séparateur plat,
les couches d'électrodes étant orientées essentiellement perpendiculairement aux régions de fond et de couvercle planes, **caractérisée en ce que**
- le couvercle de pile et le logement de pile présentent chacun une région d'enveloppe avec une géométrie cylindrique, le joint d'étanchéité est appliqué sur la région d'enveloppe du couvercle de pile et le couvercle de pile est inséré dans le logement de pile de telle sorte que l'on obtienne une région dans laquelle, en fonction de sa hauteur, entre 20 et 99 % de la région d'enveloppe du couvercle de pile sont chevauchés avec la région d'enveloppe du logement de pile et
- la pile-bouton est fermée sans bordage.

2. Pile-bouton selon la revendication 1, **caractérisée en ce que** les électrodes et/ou le séparateur sont réalisés en forme de bande ou de ruban.

3. Pile-bouton selon la revendication 1 ou la revendication 2, **caractérisée en ce que** le composite électrodes-séparateur se présente sous forme d'enroulement, en particulier sous forme d'enroulement en spirale dont les côtés frontaux sont tournés dans la direction de la région de fond plane et de la région de couvercle plane.

4. Pile-bouton selon la revendication 3, **caractérisée en ce que** l'enroulement présente en son centre une cavité axiale qui est remplie au moins en partie par un noyau d'enroulement (108 ; 512).

5. Pile-bouton selon l'une quelconque des revendications précédentes, **caractérisée en ce que** le composite électrodes-séparateur présente l'une des successions de couches suivantes :
- électrode négative / séparateur / électrode positive / séparateur
- électrode positive / séparateur / électrode négative / séparateur.

6. Pile-bouton selon l'une quelconque des revendications précédentes, **caractérisée en ce que** l'électrode positive et/ou l'électrode négative sont connectées par le biais d'un dérivateur au boîtier dans la région de la région de fond plane et/ou de la région de couvercle plane.

7. Pile-bouton selon l'une quelconque des revendications 3 à 6, **caractérisée en ce qu'**elle comprend au moins un agent isolant qui supprime un contact mécanique et électrique direct entre les côtés frontaux de l'enroulement et les régions de fond et de couvercle planes.

8. Pile-bouton selon la revendication 7, **caractérisée en ce que** l'au moins un agent isolant est une couche plate en plastique, par exemple une feuille de plastique qui est disposée entre les côtés frontaux de l'enroulement et les régions de fond et de couvercle planes.

9. Pile-bouton selon l'une quelconque des revendications précédentes, **caractérisée en ce qu'**elle est rechargeable.

10. Pile-bouton selon l'une quelconque des revendications précédentes, **caractérisée en ce qu'**elle présente un rapport hauteur : diamètre inférieur à 1, de préférence compris entre 0,1 et 0,9, en particulier entre 0,15 et 0,7.
